# EUROPEAN PATENT SPECIFICATION

(11) **EP 4 206 504 B1**
(45) Date of publication and mention of the grant of the patent: **12.02.2025**
(21) Application number: 22169447.4
(22) Date of filing: 22.04.2022
(51) Int. Cl.: F16K 11/044, F16K 31/524

(54) **WATER DIVIDING DEVICE AND WATER OUTLET DEVICE**
WASSERVERTEILERVORRICHTUNG UND WASSERAUSLASSVORRICHTUNG
DISPOSITIF DE DIVISION D'EAU ET DISPOSITIF DE SORTIE D'EAU

(30) Priority: 31.12.2021 CN 202123424061 U
(43) Date of publication of application: 05.07.2023
(73) Proprietor: Fujian Xihe Sanitary Ware Technology Co., Ltd., QuanZhou, Fujian (CN)
(72) Inventor: LIN, Xiaofa, QuanZhou, Fujian (CN); LIN, Xiaoshan, QuanZhou, Fujian (CN); SUN, Jiaxing, QuanZhou, Fujian (CN); LIU, Qiqiao, QuanZhou, Fujian (CN); DENG, Xiaoqing, QuanZhou, Fujian (CN)
(74) Representative: Cameron Intellectual Property Ltd

(56) References cited:
- EP-A1- 0 969 232
- CN-A- 111 750 134
- CN-A- 113 623 425
- DE-A1- 102011 120 259
- US-A1- 2018 073 660
- US-A1- 2020 291 626

## Description

### Technical Field

The present disclosure relates to the field of water dividing devices, in particular to a water dividing device and a water outlet device.

### Background

For existing water outlet devices, such as showers, switching and water dividing devices are generally provided in the water outlet devices in order to meet various water outlet modes. At present, ceramic valve cores are substantially used in the market for switching and water dividing, but the ceramic valve cores have relatively high cost and high limitation in appearance, and the installation, maintenance and replacement thereof are very complicated.

The document CN113623425 A discloses a shunt valve that can automatically reset after water is cut off.

The document CN111750134 A discloses a valve which has a modular assembly structure and a sealing structure.

The document EP0969232 A1 discloses a changeover valve for a fluid pressure apparatus, which has a supply body, a supply passage and an exhaust body with an exhaust passage, and a retainer provided between the supply body and the exhaust body and having a passageway connecting the supply passage with the exhaust passage.

The document DE102011120259 A1 discloses a rotary valve having several cross-section adjustment links and a rotary gear box. The rotational angle difference is produced between the cross-section adjustment links. The rotary gear box comprises a driven worm having two threads, by which the rotor is axially displaceable to a cross section adjustment links that is coupled with the rotor in the rotatable state.

### Summary

Embodiments of the present disclosure provide a water dividing device and a water outlet device which have simple structure, low cost and ability to realize modular installation.

The water dividing device provided by an embodiment of the present disclosure includes a valve body provided with a water inlet, a first water outlet and a second water outlet; a switching mechanism movably provided in the valve body and configured for switching between the water inlet being communicated with the first water outlet and the water inlet being communicated with the second water outlet; a power mechanism at least partially provided in the valve body and including a rotary rod and a pusher cooperated with the rotary rod, wherein one end of the pusher abuts against the switching mechanism, and the other end abuts against the rotary rod; the rotary rod drives the pusher by its own rotating movement to move along a straight line so as to push the switching mechanism to move; the pusher and the rotary rod have opposite ends, one of which is provided with a helical sliding way and the other is provided with an ejection rod, wherein the helical sliding way extends along both a circumferential direction and an axial direction of the pusher, and the ejection rod is capable of sliding along the helical sliding way.

In an exemplary embodiment, the helical sliding way includes a plurality of helical sliding ways symmetrically arranged along the circumferential direction of the pusher, and the ejection rod also includes a plurality of ejection rods symmetrically arranged along the circumferential direction of the rotary rod.

In an exemplary embodiment, one of an outer side wall surface of the pusher and an inner side wall surface of the valve body is provided with a limit groove along the valve body, and the other of the outer side wall surface of the pusher and the inner side wall surface of the valve body is provided with a limit protrusion cooperated with the limit groove to limit rotation of the pusher.

In an exemplary embodiment, the switching mechanism includes a guide rod disposed in the valve body. The guide rod and an inner cavity of the valve body cooperate to form a water inlet flow channel connected with the water inlet, a first water outlet flow channel connected with the first water outlet, and a second water outlet flow channel connected with the second water outlet. The switching mechanism also includes a blocking member sleeved on the guide rod, and the blocking member can block a communication port between the water inlet flow channel and the first water outlet flow channel or a communication port between the water inlet flow channel and the second water outlet flow channel.

In an exemplary embodiment, the pusher and the rotary rod have opposite ends, one of which is provided with a first groove, and the other is provided with a first leading portion extending into the first groove. One of opposite ends of the pusher and the guide rod is provided with a second groove, and the other is provided with a second leading portion extending into the second groove.

In an exemplary embodiment, the water dividing device further includes a water dividing joint for isolating a chamber where the switching mechanism is located and a chamber where the power mechanism is located, and the water dividing joint is sleeved at an end of the guide rod opposite the pusher and radially positions the guide rod.

In an exemplary embodiment, the valve body includes a main body, a first housing cooperated and connected with one end of the main body, and a second housing cooperated and connected with the other end of the main body. One end of the rotary rod extends into the first housing and abuts against the pusher, the other end of the rotary rod extends out of the first housing, and the second housing is provided with a cylinder extending into the main body. The power mechanism also includes a reset element abuts against the other end of the guide rod, and the reset element is installed in the cylinder.

In an exemplary embodiment, a side surface of a portion of the rotary rod extending out of the first housing is provided with a stop pin extending outwardly in a radial direction, the first housing is provided with a limit notch with a predetermined angle along a circumferential direction, and the stop pin can move within the limit notch and cooperate with side walls on both sides of the limit notch for limiting.

In an exemplary embodiment, an outer wall of a portion of the rotary rod located within the first housing is provided with a positioning groove with a predetermined angle along a circumferential direction, an inner wall of the first housing is provided with a protrusion extending into the positioning groove, and the protrusion can move within a circumferential range of the positioning groove.

In an exemplary embodiment, an outer wall of a portion of the rotary rod located within the first housing is also provided with an installation groove, the water dividing device further includes a collision bead assembly provided in the installation groove, and an inner wall of the first housing is provided with a collision groove cooperated with the collision bead assembly to generate a sound.

The water outlet device provided by an embodiment of the present disclosure includes the water dividing device described in any foregoing embodiments.

The water dividing device of the embodiments of the present disclosure converts the rotary motion of the rotary rod into the linear motion of the pusher, thereby realizing the division and conversion of the water flow by the switching mechanism, with simple structure and low cost.

The water dividing device of the embodiments of the present disclosure can be used as an integrated module to directly divide the water flow of the water outlet device, and can effectively form a modular match with convenient installation, maintenance and replacement and low cost.

Other features and advantages of the present disclosure will be set forth in the specification which follows, and in part will be obvious from the specification, or may be learned by implementing the present disclosure. The objects and other advantages of the present disclosure can be realized and obtained by the structures particularly indicated in the specification and drawings.

### Brief Description of Drawings

The accompanying drawings are used to provide a further understanding of the technical schemes of the present disclosure, and constitute a part of the specification. They are used together with the embodiments of the present application to explain the technical schemes of the present disclosure, and do not constitute a restriction on the technical schemes of the present disclosure.
FIG. 1 is an integral perspective view of a water dividing device according to an embodiment of the present disclosure;
FIG. 2 is a perspective exploded view of FIG. 1;
FIG. 3 is a partial view of the water dividing device sectioned along an axial direction according to an embodiment of the present disclosure;
FIG. 4 is a sectional view showing a first state of a guide rod in a valve body according to an embodiment of the present disclosure;
FIG. 5 is a sectional view showing a second state of the guide rod in the valve body according to an embodiment of the present disclosure;
FIG. 6 is an enlarged view of a part of FIG. 2;
FIG. 7 is a view of FIG. 6 from another angle;
FIG. 8 is an integral sectional view showing a first state of the water dividing device along the axial direction according to an embodiment of the present disclosure;
FIG. 9 is an integral sectional view showing a second state of the water dividing device along the axial direction according to the embodiment of the present disclosure;
FIG. 10 is a perspective exploded view of a first assembly and a second assembly of the water dividing device according to an embodiment of the present disclosure;
FIG. 11 is a perspective assembled view of a first assembly and a second assembly of the water dividing device according to the embodiment of the present disclosure; and
FIG. 12 is a perspective exploded view of a water outlet device according to an embodiment of the present disclosure.

### Detailed Description

In order to make the purposes, technical schemes and advantages of the present disclosure clearer, embodiments of the present disclosure will be described in detail below with reference to the drawings. It should be noted that the embodiments in the present application and the features in the embodiments may be combined with each other arbitrarily if there is no conflict.

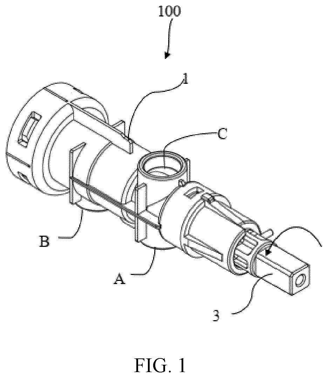

As shown in FIG. 1, an embodiment of the present disclosure provides a water dividing device 100 including a valve body 1 provided with a water inlet A, a first water outlet B and a second water outlet C.

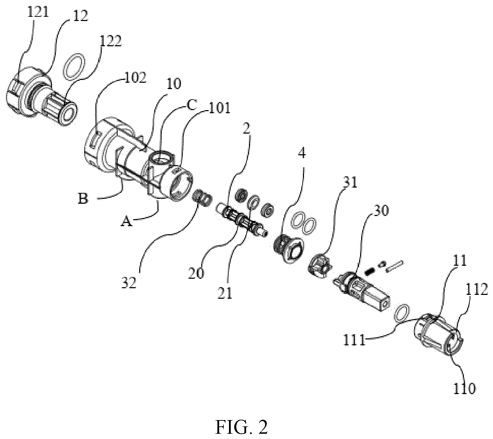

As shown in FIG. 2, the valve body 1 includes a main body 10, a first housing 11 cooperated and connected with one end of the main body 10, and a second housing 12 cooperated and connected with the other end of the main body 10.

The main body 10 is provided with the water inlet A, the first water outlet B, and the second water outlet C described above. An outer periphery of one end of the main body 10 connected with the first housing 11 is provided with a plurality of first bayonets 101 arranged at intervals, and an outer periphery of one end of the main body 10 connected with the second housing 12 is provided with a plurality of second bayonets 102 arranged at intervals. The water inlet A, the first water outlet B, and the second water outlet C are located between the first bayonets 101 and the second bayonets 102 along an axial direction of the main body 10. The first housing 11 has a through cavity 110 penetrated through in a front-back direction. An outer periphery of one end of the first housing 11 connected with the main body 10 is provided with a plurality of first buckles 111 arranged at intervals and cooperated and snapped with the first bayonets 101, and the other end of the first housing 11 is provided with a limit notch 112 with a predetermined angle along a circumferential direction. An outer periphery of one end of the second housing 12 is provided with a plurality of second buckles 121 arranged at intervals and cooperated and snapped with the second bayonets 102, and the other end of the second housing 12 is provided with a cylinder 122 extendable into the main body 10, and the cylinder 122 extends into an inner cavity of the main body 10.

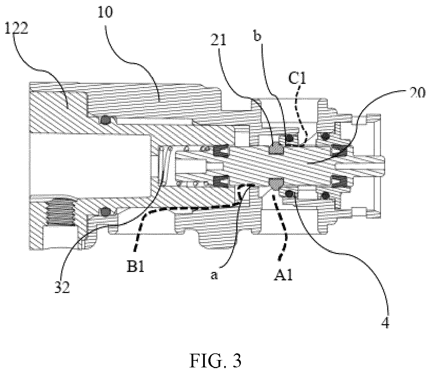

As shown in FIGS. 2 and 3, a switching mechanism 2 is provided within the valve body 1. The switching mechanism 2 is movably provided in the valve body 1 and configured for switching between the water inlet A being communicated with the first water outlet B and the water inlet A being communicated with the second water outlet C.

The switching mechanism 2 includes a guide rod 20 provided in the valve body 1, and the guide rod 20 cooperates with the inner cavity of the valve body 1 to form a water inlet flow channel A1 connected with the water inlet A, a first water outlet flow channel B1 connected with the first water outlet B, and a second water outlet flow channel C1 connected with the second water outlet C.

The switching mechanism 2 also includes a blocking member 21 sleeved on the guide rod 20. The blocking member 21 is capable of blocking a communication port a between the water inlet flow channel A1 and the first water outlet flow channel B1 or a communication port b between the water inlet flow channel A1 and the second water outlet flow channel C1.

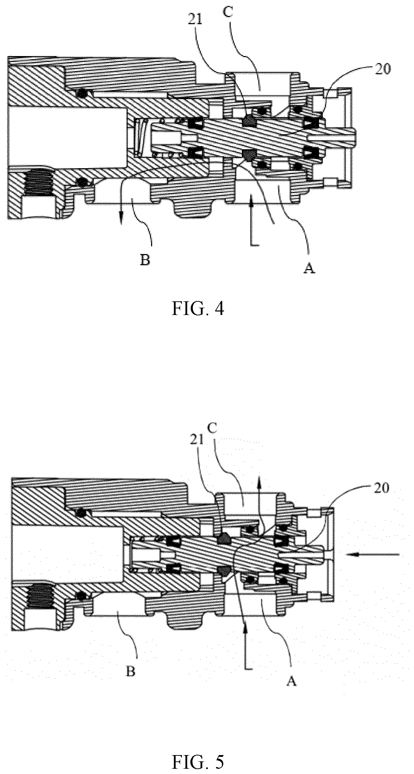

As shown in FIG. 4, when the guide rod 20 is in a first position, the blocking member 21 blocks the communication port b between the water inlet flow channel A1 and the second water outlet flow channel C1, and the water inlet flow channel A1 and the second water outlet flow channel C1 are disconnected. At this point, the communication port a between the water inlet flow channel A1 and the first water outlet flow channel B1 is in an open state, and the water inlet flow channel A1 is communicated with the first water outlet flow channel B1, so that the water flows into the water inlet A and flows out of the first water outlet B. The direction of the water flow is the direction pointed by the arrow in FIG. 4.

As shown in FIG. 5, when the guide rod 20 is in a second position, the blocking member 21 blocks the communication port a between the water inlet flow channel A1 and the first water outlet flow channel B1, and the water inlet flow channel A1 and the first water outlet flow channel B1 are disconnected. At this point, the communication port b between the water inlet flow channel A1 and the second water outlet flow channel C1 is in an open state, and the water inlet flow channel A1 is communicated with the second water outlet flow channel C1, so that the water flows into the water inlet A and flows out of the second water outlet C. The direction of the water flow is the direction pointed by the arrow in FIG. 5.

As shown in FIGS. 1-2, the water dividing device 100 further includes a power mechanism 3 at least partially provided in the valve body 1. The power mechanism 3 includes a rotary rod 30 and a pusher 31 cooperated with the rotary rod 30. One end of the pusher 31 abuts against the switching mechanism 2, and the other end abuts against the rotary rod 30. The rotary rod 30 drives the pusher 31 by its own rotary motion to push the switching mechanism 2 to move along a straight line and switch positions.

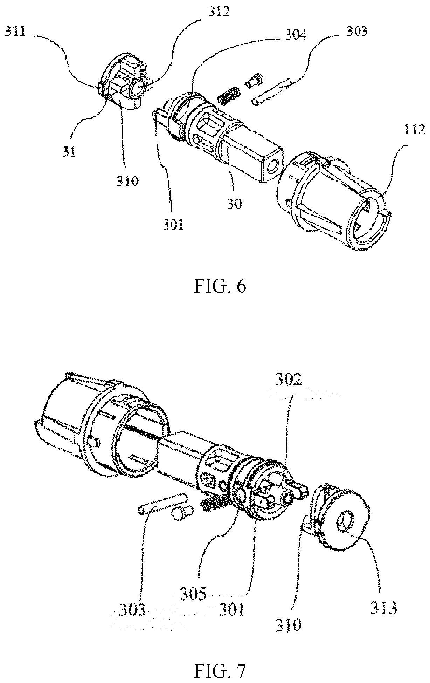

As shown in FIGS. 6-9, one end of the rotary rod 30 extends into the first housing 11 and abuts against the pusher 31, and the other end extends out of the first housing 11.

As shown in FIGS. 6 and 7, a stop pin 303 extending outwardly along a radial direction is provided on a side surface of a portion of the rotary rod 30 extending out of the first housing 11, and the stop pin 303 cooperates with the limit notch 112 in the first housing 11. The stop pin 303 can move within the limit notch 112 and cooperate with the side walls on both sides of the limit notch 112 for limiting, so as to realize a limitation for the rotation angle of the rotary rod 30.

As shown in FIG. 6, a protrusion 304 is provided along the circumferential direction on an outer wall of a portion of the rotary rod 30 located in the first housing 11, and a positioning groove (not shown) with a predetermined angle is provided on an inner wall of the first housing 11. The protrusion 304 extends into the positioning groove and can move within a circumferential range of the positioning groove, thereby realizing another limitation for the rotation angle of the rotary rod 30.

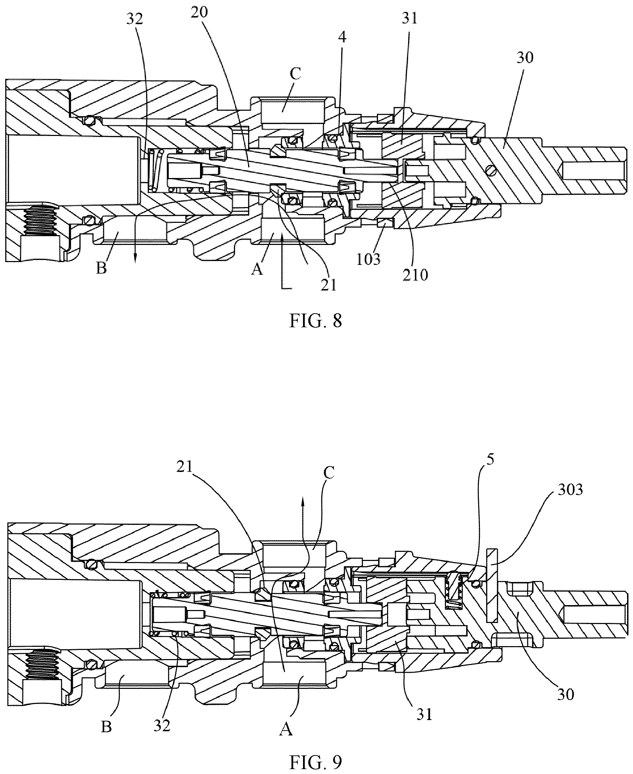

As shown in FIGS. 7 and 9, an installation groove 305 is also provided on the outer wall of the portion of the rotary rod 30 located in the first housing 11. The water dividing device 100 further includes a collision bead assembly 5 provided in the installation groove 305. The inner wall of the first housing 11 is provided with a collision groove (not numbered) cooperated with the collision bead assembly 5 to generate a sound, so that when the rotary rod 30 rotates to a predetermined position, the collision bead assembly 5 generates a collision sound, thereby improving the user's hand feeling in operation.

The embodiments of the present disclosure convert the rotary motion of the rotary rod 30 into the linear motion of the pusher 31, thereby realizing the division and conversion of the water flow by the switching mechanism 2, with simple structure, low cost and ability of being modular.

As shown in FIGS. 6-7, the pusher 31 and the rotary rod 30 have opposite ends, one of which is provided with a helical sliding way 310, and the other is provided with an ejection rod 301. The helical sliding way 310 extends in both the circumferential direction and the axial direction of the pusher 31. The ejection rod 301 is provided at one end of the rotary rod 30 opposite the pusher 31, and the ejection rod 301 can slide along the helical sliding way 310. The cooperated motion of the helical sliding way 310 and the rotary rod 30 can convert the rotational movement of the rotary rod 30 into the linear movement of the pusher 31. In this embodiment, the helical sliding way 310 is provided at an end of the pusher 31, and the ejection rod 301 is provided at an end of the rotary rod 30. In this embodiment, the helical sliding way 310 includes a plurality of helical sliding ways arranged symmetrically along the circumferential direction of the pusher 31, and the ejection rod 301 also includes a plurality of ejection rods arranged symmetrically along the circumferential direction of the rotary rod 30, so that the rotary rod 30 can smoothly push the pusher 31 and the power mechanism 3 can move smoothly.

One of the outer side wall surface of the pusher 31 and the inner side wall surface of the valve body 1 is provided with a limit groove 103 extending along the axial direction of the valve body 1, and the other of the outer side wall surface of the pusher 31 and the inner side wall surface of the valve body 1 is provided with a limit protrusion 311 cooperated with the limit groove 103 (see FIG. 8). By the cooperation of the limit groove 103 and the limit protrusion 311, the pusher 31 can only move in the axial direction, and the pusher 31 is prevented from rotating together with the rotary rod 30.

As shown in FIGS. 6 and 7, one of the opposite ends of the pusher 31 and the rotary rod 30 is provided with a first groove 312, and the other of the opposite ends of the pusher 31 and the rotary rod 30 is provided with a first leading portion 302 extending into the first groove 312. In this embodiment, the pusher 31 is provided with the first groove 312, and the rotary rod 30 is provided with the first leading portion 302, so that the rotary rod 30 can be positioned for smooth movement.

As shown in FIGS. 7 and 8, one of the opposite ends of the pusher 31 and the guide rod 20 is provided with a second groove 313, and the other of the opposite ends of the pusher 31 and the guide rod 20 is provided with a second leading portion 210 extending into the second groove 313. In this embodiment, the pusher 31 is provided with the second groove 313, and the guide rod 20 is provided with the second leading portion 210, so that the guide rod 20 can be positioned for smooth movement.

As shown in FIGS. 2-3, the power mechanism 3 further includes a reset element 32 abutting against one end of the guide rod 20 facing away from the pusher 31, and the reset element 32 is installed and positioned within the cylinder 122. The reset element 32 can push the guide rod 20 back to an initial position when the rotary rod 30 returns to the initial position.

As shown in FIGS. 2 and 3, the water dividing device 100 also includes a water dividing joint 4 for isolating the chamber where the switching mechanism 2 is located and the chamber where the power mechanism 3 is located. The water dividing joint 4 is sleeved at one end of the guide rod 20 opposite the pusher 31, and positions the guide rod 20 in the radial direction. The water dividing joint 4 can seal the power mechanism 3 and constrain the flow of water towards the first housing 11.

As shown in FIG. 8, in the initial position, the rotary rod 30 is positioned on one side of the limit notch 112, and the reset element 32 abuts against the guide rod 20 to prevent the guide rod 20 from moving under the action of water flow. The blocking member 21 blocks the communication port b between the water inlet flow channel A1 and the second water outlet flow channel C1, the water inlet flow channel A1 and the second water outlet flow channel C1 are disconnected, the communication port a between the water inlet flow channel A1 and the first water outlet flow channel B1 is in an open state, the water inlet flow channel A1 is communicated with the first water outlet flow channel B1, and water flows into the water inlet A and flows out of the first water outlet B.

As shown in FIG. 9, the rotary rod 30 is rotated to one side of the limit notch 112. During the rotation, the rotary rod 30 drives the pusher 31 to move in a direction toward the guide rod 20 and push the guide rod 20 to move along a straight line, so that the blocking member 21 moves away from the communication port b, the water inlet flow channel A1 is communicated with the second water outlet flow channel C1, and water is discharged from the second water outlet C. The blocking member 21 is at the communication port a and blocks the communication port a, so that the water inlet flow channel A1 and the first water outlet flow channel B1 are disconnected.

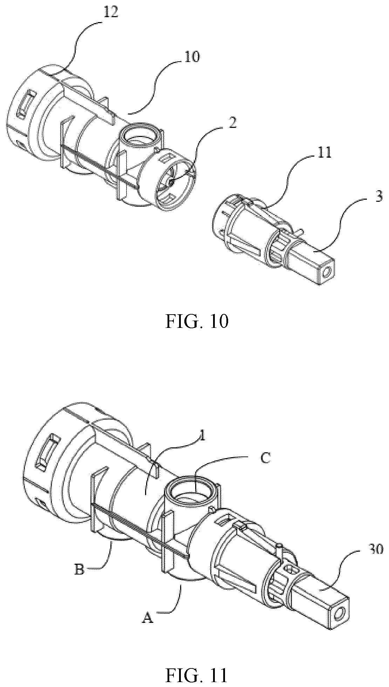

As shown in FIGS. 10-11, upon assembling the water dividing device 100 of the embodiments of the present disclosure, the first housing 11 and the power mechanism 3 can be assembled into a first assembly, and the second housing 12, the main body 10, the water dividing mechanism 2 can be assembled into a second assembly, respectively, and then the first assembly and the second assembly can be assembled.

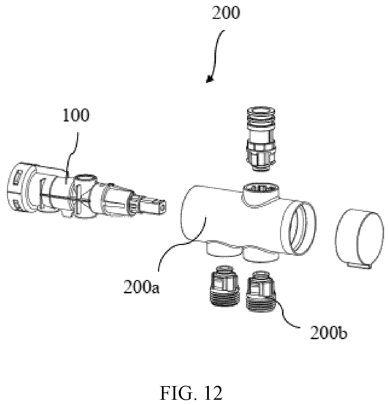

As shown in FIG. 12, an embodiment of the present disclosure also provides a water outlet device 200 including an outer housing 200a, and the water dividing device 100 of any embodiments of the present disclosure installed in the outer housing 200a, water can be led in or out of the water dividing device 100 through a plurality of water inlet joints and water outlet joints 200b. The water outlet device can be connected with faucet, shower and the like. The water dividing device 100 can distribute the outflow water of the water outlet device 200.

The water dividing device 100 of the embodiments of the present disclosure can be used as an integrated module to directly divide the water flow of the water outlet device 200, and can effectively form a modular match, with convenient installation, maintenance and replacement and low cost.

In the description of the present disclosure, it should be noted that the orientation or position relationships indicated by the terms "upper", "lower", "one side", "the other side", "one end", "the other end", "side", "relative", "four corners", "periphery", "square structure" and the like are based on the orientation or position relationships shown in the drawings, which are only for convenience of describing the embodiments of the present disclosure and simplifying the description, rather than indicating or implying that the structure referred has the specific orientation, or is constructed and operated in the specific orientation, and thus cannot be interpreted as a limitation on the embodiments of the present disclosure.

In the description of the embodiments of the present disclosure, unless otherwise explicitly specified and limited, the terms "connection", "direct connection", "indirect connection", "fixed connection", "installation" and "assembly" should be understood in a broad sense. For example, they may be a fixed connection, detachable connection or integrated connection. The terms "installation", "connection" and "fixed connection" may be direct connection, or indirect connection through an intermediary, or may be an internal communication between two elements. For those of ordinary skills in the art, the specific meanings of the above terms in the present disclosure can be understood according to specific situations.

Although implementations disclosed by the present disclosure are described above, the described contents are only implementations adopted for facilitating the understanding of the present disclosure, and are not intended to limit the present disclosure. Any person skilled in the art to which the present disclosure pertains may make any modifications and changes in the form and details of implementation, but the scope of patent protection of the present disclosure shall still be defined by the appended claims.

## Claims

1. A water dividing device (100), comprising:
a valve body (1) provided with a water inlet (A), a first water outlet (B) and a second water outlet (C);
a switching mechanism (2) movably provided in the valve body (1) and configured for switching between the water inlet (A) being communicated with the first water outlet (B) and the water inlet (A) being communicated with the second water outlet (C);
a power mechanism (3) at least partially provided in the valve body (1) and comprising a rotary rod (30) and a pusher (31) cooperated with the rotary rod (30), wherein one end of the pusher (31) abuts against the switching mechanism (2), and the other end of the pusher (31) abuts against the rotary rod (30); the rotary rod (30) drives the pusher (31) by its own rotating movement to move along a straight line so as to push the switching mechanism (2) to move;
**characterized in that** the pusher (31) and the rotary rod (30) have opposite ends, one of which is provided with a helical sliding way (310), the other is provided with an ejection rod (301), and the helical sliding way (310) extends along both a circumferential direction and a axial direction of the pusher (31), and the ejection rod (301) is capable of sliding along the helical sliding way (310).

2. The water dividing device (100) according to claim 1, wherein the helical sliding way (310) comprises a plurality of helical sliding ways (310) symmetrically arranged along the circumferential direction of the pusher (31), and the ejection rod (301) also comprises a plurality of ejection rods (301) symmetrically arranged along a circumferential direction of the rotary rod (30).

3. The water dividing device (100) according to claim 2, wherein one of an outer side wall surface of the pusher (31) and an inner side wall surface of the valve body (1) is provided with a limit groove (103) extending along an axial direction of the valve body (1), and the other of the outer side wall surface of the pusher (31) and the inner side wall surface of the valve body (1) is provided with a limit protrusion (311) cooperated with the limit groove (103) to limit rotation of the pusher (31).

4. The water dividing device (100) according to claim 1, wherein the switching mechanism (2) comprises a guide rod (20) provided in the valve body (1), and the guide rod (20) cooperates with an inner cavity of the valve body (1) to form a water inlet flow channel (A1) connected with the water inlet (A), a first water outlet flow channel (B1) connected with the first water outlet (B) and a second water outlet flow channel (C1) connected with the second water outlet (C); the switching mechanism (2) further comprises a blocking member (21) sleeved on the guide rod (20), and the blocking member (21) is capable of blocking a communication port (a) between the water inlet flow channel (A1) and the first water outlet flow channel (B1) or a communication port (b) between the water inlet flow channel (A1) and the second water outlet flow channel (C1).

5. The water dividing device (100) according to claim 4, wherein the pusher (31) and the rotary rod (30) have opposite ends, one of which is provided with a first groove (312), and the other is provided with a first leading portion (302) extendable into the first groove (312); the pusher (31) and the guide rod (20) have opposite ends, one of which is provided with a second groove (313), and the other is provided with a second leading portion (210) extendable into the second groove (313).

6. The water dividing device (100) according to claim 5, further comprising a water dividing joint (4) for isolating a chamber where the switching mechanism (2) is located and a chamber where the power mechanism (3) is located, wherein the water dividing joint (4) is sleeved at an end of the guide rod (20) opposite to the pusher (31) and radially positions the guide rod (20).

7. The water dividing device (100) according to claim 5, wherein the valve body (1) comprises a main body (10), a first housing (11) cooperated and connected with one end of the main body (10), and a second housing (12) cooperated and connected with the other end of the main body (10); one end of the rotary rod (30) extends into the first housing (11) and abuts against the pusher (31), and the other end of the rotary rod (30) extends out of the first housing (11), the second housing (12) is provided with a cylinder (122) extendable into the main body (10), the power mechanism (3) further comprises a reset element (32) abutting against one end of the guide rod (20) facing away from the pusher (31), and the reset element (32) is installed in the cylinder (122).

8. The water dividing device (100) according to claim 7, wherein a side surface of a portion of the rotary rod (30) extending out of the first housing (11) is provided with a stop pin (303) extending outwardly along a radial direction, a limit notch (112) with a predetermined angle along a circumferential direction is provided on the first housing (11), and the stop pin (303) is capable of moving within the limit notch (112) and cooperating with side walls on both sides of the limit notch (112) for limiting.

9. The water dividing device (100) according to claim 8, wherein an outer wall of a portion of the rotary rod (30) located in the first housing (11) is provided with a positioning groove with a predetermined angle along a circumferential direction, and an inner wall of the first housing (11) is provided with a protrusion (304) extendable into the positioning groove, and the protrusion (304) is capable of moving within a circumferential range of the positioning groove.

10. The water dividing device (100) according to claim 8, wherein an outer wall of a portion of the rotary rod (30) located in the first housing (11) is further provided with an installation groove (305), the water dividing device (100) further comprises a collision bead assembly (5) provided in the installation groove (305), and an inner wall of the first housing (11) is provided with a collision groove cooperated with the collision bead assembly (5) to generate a sound.

11. A water outlet device (200), comprising the water dividing device (100) according to any one of claims 1 to 10.

## Patentansprüche

1. Wasserteilungsvorrichtung (100), die Folgendes umfasst:
einen Ventilkörper (1), der mit einem Wassereinlass (A), einem ersten Wasserauslass (B) und einem zweiten Wasserauslass (C) bereitgestellt ist;
einen Schaltmechanismus (2), der beweglich in dem Ventilkörper (1) bereitgestellt und dazu konfiguriert ist, zwischen dem Wassereinlass (A), der mit dem ersten Wasserauslass (B) in Verbindung steht, und dem Wassereinlass (A), der mit dem zweiten Wasserauslass (C) in Verbindung steht, zu schalten;
einen Antriebsmechanismus (3), der zumindest teilweise in dem Ventilkörper (1) bereitgestellt ist und eine Drehstange (30) und einen mit der Drehstange (30) zusammenwirkenden Drücker (31) umfasst, wobei ein Ende des Drückers (31) an dem Schaltmechanismus (2) anliegt und das andere Ende des Drückers (31) an der Drehstange (30) anliegt; wobei die Drehstange (30) den Drücker (31) durch ihre eigene Drehbewegung antreibt, um sich entlang einer geraden Linie zu bewegen, sodass der Schaltmechanismus (2) zum Bewegen gedrückt wird;
**dadurch gekennzeichnet, dass** der Drücker (31) und die Drehstange (30) gegenüberliegende Enden aufweisen, von denen eines mit einer schraubenförmigen Gleitbahn (310) bereitgestellt ist, das andere mit einer Auswurfstange (301) bereitgestellt ist, und die schraubenförmige Gleitbahn (310) sich sowohl entlang einer Umfangsrichtung als auch einer axialen Richtung des Drückers (31) erstreckt und die Auswurfstange (301) in der Lage ist, entlang der schraubenförmigen Gleitbahn (310) zu gleiten.

2. Wasserteilungsvorrichtung (100) nach Anspruch 1, wobei die schraubenförmige Gleitbahn (310) eine Vielzahl von schraubenförmigen Gleitbahnen (310) umfasst, die symmetrisch entlang der Umfangsrichtung des Drückers (31) angeordnet sind, und die Auswurfstange (301) ebenfalls eine Vielzahl von Auswurfstangen (301) umfasst, die symmetrisch entlang einer Umfangsrichtung der Drehstange (30) angeordnet sind.

3. Wasserteilungsvorrichtung (100) nach Anspruch 2, wobei eine von einer äußeren Seitenwandfläche des Drückers (31) und einer inneren Seitenwandfläche des Ventilkörpers (1) mit einer Begrenzungsnut (103) bereitgestellt ist, die sich entlang einer axialen Richtung des Ventilkörpers (1) erstreckt, und die andere von der äußeren Seitenwandfläche des Drückers (31) und der inneren Seitenwandfläche des Ventilkörpers (1) mit einem Begrenzungsvorsprung (311) bereitgestellt ist, der mit der Begrenzungsnut (103) zusammenwirkt, um die Drehung des Drückers (31) zu begrenzen.

4. Wasserteilungsvorrichtung (100) nach Anspruch 1, wobei der Schaltmechanismus (2) eine Führungsstange (20) umfasst, die in dem Ventilkörper (1) bereitgestellt ist, und die Führungsstange (20) mit einem inneren Hohlraum des Ventilkörpers (1) zusammenwirkt, um einen mit dem Wassereinlass (A) verbundenen Wassereinlassströmungskanal (Al), einen mit dem ersten Wasserauslass (B) verbundenen ersten Wasserauslassströmungskanal (Bl) und einen mit dem zweiten Wasserauslass (C) verbundenen zweiten Wasserauslassströmungskanal (Cl) zu bilden; wobei der Schaltmechanismus (2) ferner ein auf der Führungsstange (20) aufgeschobenes Blockierelement (21) umfasst, und das Blockierelement (21) in der Lage ist, eine Kommunikationsöffnung (a) zwischen dem Wassereinlassströmungskanal (Al) und dem ersten Wasserauslassströmungskanal (Bl) oder eine Kommunikationsöffnung (b) zwischen dem Wassereinlassströmungskanal (Al) und dem zweiten Wasserauslassströmungskanal (Cl) zu blockieren.

5. Wasserteilungsvorrichtung (100) nach Anspruch 4, wobei der Drücker (31) und die Drehstange (30) gegenüberliegende Enden aufweisen, von denen eines mit einer ersten Nut (312) bereitgestellt ist und das andere mit einem ersten Führungsabschnitt (302) bereitgestellt ist, der sich in die erste Nut (312) erstrecken kann; der Drücker (31) und die Führungsstange (20) gegenüberliegende Enden aufweisen, von denen eines mit einer zweiten Nut (313) bereitgestellt ist und das andere mit einem zweiten Führungsabschnitt (210) bereitgestellt ist, der sich in die zweite Nut (313) erstrecken kann.

6. Wasserteilungsvorrichtung (100) nach Anspruch 5, ferner umfassend eine Wasserteilungsfuge (4) zum Isolieren einer Kammer, in der der Schaltmechanismus (2) angeordnet ist, und einer Kammer, in der der Antriebsmechanismus (3) angeordnet ist, wobei die Wasserteilungsfuge (4) an einem Ende der Führungsstange (20) gegenüber dem Drücker (31) aufgeschoben ist und die Führungsstange (20) radial positioniert.

7. Wasserteilungsvorrichtung (100) nach Anspruch 5, wobei der Ventilkörper (1) einen Hauptkörper (10), ein erstes Gehäuse (11), das mit einem Ende des Hauptkörpers (10) zusammenwirkt und verbunden ist, und ein zweites Gehäuse (12), das mit dem anderen Ende des Hauptkörpers (10) zusammenwirkt und verbunden ist, umfasst; ein Ende der Drehstange (30) sich in das erste Gehäuse (11) erstreckt und an dem Drücker (31) anliegt, und das andere Ende der Drehstange (30) sich aus dem ersten Gehäuse (11) heraus erstreckt, das zweite Gehäuse (12) mit einem Zylinder (122) bereitgestellt ist, der sich in den Hauptkörper (10) erstrecken kann, der Antriebsmechanismus (3) ferner ein Rückstellelement (32) umfasst, das an einem Ende der Führungsstange (20) anliegt, das dem Drücker (31) abgewandt ist, und das Rückstellelement (32) in dem Zylinder (122) installiert ist.

8. Wasserteilungsvorrichtung (100) nach Anspruch 7, wobei eine Seitenfläche eines Abschnitts der Drehstange (30), der sich aus dem ersten Gehäuse (11) heraus erstreckt, mit einem Anschlagstift (303) bereitgestellt ist, der sich nach außen entlang einer radialen Richtung erstreckt, eine Begrenzungskerbe (11 2) mit einem vorbestimmten Winkel entlang einer Umfangsrichtung auf dem ersten Gehäuse (11) bereitgestellt ist und der Anschlagstift (303) in der Lage ist, sich innerhalb der Begrenzungskerbe (112) zu bewegen und mit Seitenwänden auf beiden Seiten der Begrenzungskerbe (112) zum Begrenzen zusammenzuwirken.

9. Wasserteilungsvorrichtung (100) nach Anspruch 8, wobei eine Außenwand eines Abschnitts der Drehstange (30), die in dem ersten Gehäuse (11) angeordnet ist, mit einer Positionierungsnut mit einem vorbestimmten Winkel entlang einer Umfangsrichtung bereitgestellt ist, und eine Innenwand des ersten Gehäuses (11) mit einem Vorsprung (304) bereitgestellt ist, der sich in die Positionierungsnut erstrecken kann, und der Vorsprung (304) in der Lage ist, sich innerhalb eines Umfangsbereichs der Positionierungsnut zu bewegen.

10. Wasserteilungsvorrichtung (100) nach Anspruch 8, wobei eine Außenwand eines Abschnitts der Drehstange (30), der in dem ersten Gehäuse (11) angeordnet ist, ferner mit einer Installationsnut (305) bereitgestellt ist, die Wasserteilungsvorrichtung (100) ferner eine in der Installationsnut (305) bereitgestellte Kollisionswulstanordnung (5) umfasst und eine Innenwand des ersten Gehäuses (11) mit einer Kollisionsnut bereitgestellt ist, die mit der Kollisionswulstanordnung (5) zum Erzeugen eines Geräusches zusammenwirkt.

11. Wasserteilungsvorrichtung (200), umfassend die Wasserteilungsvorrichtung (100) nach einem der Ansprüche 1 bis 10.

## Revendications

1. Dispositif de division d'eau (100), comprenant :
un corps de soupape (1) pourvu d'une entrée d'eau (A), d'une première sortie d'eau (B) et d'une seconde sortie d'eau (C) ;
un mécanisme de commutation (2) prévu de manière mobile dans le corps de soupape (1) et configuré pour commuter entre l'entrée d'eau (A) étant en communication avec la première sortie d'eau (B) et l'entrée d'eau (A) étant en communication avec la seconde sortie d'eau (C) ;
un mécanisme de puissance (3) au moins partiellement prévu dans le corps de soupape (1) et comprenant une tige rotative (30) et un poussoir (31) coopérant avec la tige rotative (30), dans lequel une extrémité du poussoir (31) vient en butée contre le mécanisme de commutation (2), et l'autre extrémité du poussoir (31) vient en butée contre la tige rotative (30) ;
la tige rotative (30) entraîne le poussoir (31) par son propre mouvement de rotation pour se déplacer le long d'une ligne droite de manière à pousser le mécanisme de commutation (2) à se déplacer ;
**caractérisé en ce que** le poussoir (31) et la tige rotative (30) ont des extrémités opposées, dont l'une est pourvue d'une voie de coulissement hélicoïdale (310), l'autre est pourvue d'une tige d'éjection (301), et la voie de coulissement hélicoïdale (310) s'étend à la fois le long d'une direction circonférentielle et d'une direction axiale du poussoir (31), et la tige d'éjection (301) peut coulisser le long de la voie de coulissement hélicoïdale (310).

2. Dispositif de division d'eau (100) selon la revendication 1, dans lequel la voie de coulissement hélicoïdale (310) comprend une pluralité de voies de coulissement hélicoïdales (310) disposées symétriquement le long de la direction circonférentielle du poussoir (31), et la tige d'éjection (301) comprend également une pluralité de tiges d'éjection (301) disposées symétriquement le long d'une direction circonférentielle de la tige rotative (30).

3. Dispositif de division d'eau (100) selon la revendication 2, dans lequel l'une d'une surface de paroi latérale extérieure du poussoir (31) et d'une surface de paroi latérale intérieure du corps de soupape (1) est pourvue d'une rainure de limite (103) s'étendant le long d'une direction axiale du corps de soupape (1), et l'autre de la surface de paroi latérale extérieure du poussoir (31) et de la surface de paroi latérale intérieure du corps de soupape (1) est pourvue d'une saillie de limite (311) coopérant avec la rainure de limite (103) pour limiter la rotation du poussoir (31).

4. Dispositif de division d'eau (100) selon la revendication 1, dans lequel le mécanisme de commutation (2) comprend une tige de guidage (20) disposée dans le corps de soupape (1), et la tige de guidage (20) coopère avec une cavité intérieure du corps de soupape (1) pour former un canal d'écoulement d'entrée d'eau (Al) connecté à l'entrée d'eau (A), un premier canal d'écoulement de sortie d'eau (Bl) connecté à la première sortie d'eau (B) et un second canal d'écoulement de sortie d'eau (Cl) connecté à la seconde sortie d'eau (C) ; le mécanisme de commutation (2) comprend en outre un élément de blocage (21) manchonné sur la tige de guidage (20), et l'élément de blocage (21) peut bloquer un orifice de communication (a) entre le canal d'écoulement d'entrée d'eau (Al) et le premier canal d'écoulement de sortie d'eau (Bl) ou un orifice de communication (b) entre le canal d'écoulement d'entrée d'eau (Al) et le second canal d'écoulement de sortie d'eau (Cl).

5. Dispositif de division d'eau (100) selon la revendication 4, dans lequel le poussoir (31) et la tige rotative (30) ont des extrémités opposées, dont l'une est pourvue d'une première rainure (312), et l'autre est pourvue d'une première partie avant (302) pouvant s'étendre dans la première rainure (312) ; le poussoir (31) et la tige de guidage (20) ont des extrémités opposées, dont l'une est pourvue d'une seconde rainure (313), et l'autre est pourvue d'une seconde partie avant (210) pouvant s'étendre dans la seconde rainure (313).

6. Dispositif de division d'eau (100) selon la revendication 5, comprenant en outre un joint de division d'eau (4) pour isoler une chambre où le mécanisme de commutation (2) est situé et une chambre où le mécanisme de puissance (3) est situé, dans lequel le joint de division d'eau (4) est manchonné à une extrémité de la tige de guidage (20) opposée au poussoir (31) et positionne radialement la tige de guidage (20).

7. Dispositif de division d'eau (100) selon la revendication 5, dans lequel le corps de soupape (1) comprend un corps principal (10), un premier boîtier (11) coopérant et relié à une extrémité du corps principal (10), et un second boîtier (12) coopérant et relié à l'autre extrémité du corps principal (10) ; une extrémité de la tige rotative (30) s'étend dans le premier boîtier (11) et vient en butée contre le poussoir (31), et l'autre extrémité de la tige rotative (30) s'étend hors du premier boîtier (11), le second boîtier (12) est pourvu d'un cylindre (122) pouvant s'étendre dans le corps principal (10), le mécanisme de puissance (3) comprend en outre un élément de réinitialisation (32) venant en butée contre une extrémité de la tige de guidage (20) tournée à l'opposé du poussoir (31), et l'élément de réinitialisation (32) est installé dans le cylindre (122).

8. Dispositif de division d'eau (100) selon la revendication 7, dans lequel une surface latérale d'une partie de la tige rotative (30) s'étendant hors du premier boîtier (11) est pourvue d'une broche d'arrêt (303) s'étendant vers l'extérieur le long d'une direction radiale, une encoche de limite (112) avec un angle prédéterminé le long d'une direction circonférentielle est prévue sur le premier boîtier (11), et la broche d'arrêt (303) peut se déplacer à l'intérieur de l'encoche de limite (112) et de coopérer avec des parois latérales des deux côtés de l'encoche de limite (112) pour limiter.

9. Dispositif de division d'eau (100) selon la revendication 8, dans lequel une paroi extérieure d'une partie de la tige rotative (30) située dans le premier boîtier (11) est pourvue d'une rainure de positionnement avec un angle prédéterminé le long d'une direction circonférentielle, et une paroi intérieure du premier boîtier (11) est pourvue d'une saillie (304) pouvant s'étendre dans la rainure de positionnement, et la saillie (304) peut se déplacer dans une plage circonférentielle de la rainure de positionnement.

10. Dispositif de division d'eau (100) selon la revendication 8, dans lequel une paroi extérieure d'une partie de la tige rotative (30) située dans le premier boîtier (11) est en outre pourvue d'une rainure d'installation (305), le dispositif de division d'eau (100) comprend en outre un ensemble baguette de collision (5) prévu dans la rainure d'installation (305), et une paroi intérieure du premier boîtier (11) est pourvue d'une rainure de collision coopérant avec l'ensemble baguette de collision (5) pour générer un son.

11. Dispositif de sortie d'eau (200), comprenant le dispositif de division d'eau (100) selon l'une quelconque des revendications 1 à 10.
